(19) Europäisches Patentamt

European Patent Office

Office européen des brevets

(11) **EP 4 134 165 A1**

(12) **EUROPÄISCHE PATENTANMELDUNG**

(43) Veröffentlichungstag:
**15.02.2023   Patentblatt 2023/07**

(21) Anmeldenummer: **22185354.2**

(22) Anmeldetag: **18.07.2022**

(51) Internationale Patentklassifikation (IPC):
**B01L 3/00** (1968.09)       **G01N 27/28** (1968.09)
**G01N 27/416** (1990.01)

(52) Gemeinsame Patentklassifikation (CPC):
**B01L 3/5027; G01N 27/28; G01N 27/416**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **12.08.2021   DE 102021121040**

(71) Anmelder: **Fraunhofer-Gesellschaft zur Förderung der angewandten Forschung e.V. 80686 München (DE)**

(72) Erfinder:
• **Büttner, Tim**
  **76327 Pfinztal (DE)**
• **Kunkel, Robin**
  **76327 Pfinztal (DE)**
• **Pinkwart, Karsten**
  **76327 Pfinztal (DE)**

(74) Vertreter: **Lichti - Patentanwälte Partnerschaft mbB Postfach 41 07 60 76207 Karlsruhe (DE)**

(54) **VERFAHREN UND VORRICHTUNG ZUR SIMULTANEN ERMITTLUNG DER ELEKTROCHEMISCHEN AKTIVITÄT EINER MEHRZAHL AN MATERIALIEN**

(57)    Es wird ein Verfahren zur simultanen Ermittlung der elektrochemischen Aktivität einer Mehrzahl an Materialien, wie Elektrokatalysatoren, vorgeschlagen, indem zwischen einer jeweiligen Arbeitselektrode, auf welche das jeweilige Material aufgebracht ist, und einer Referenzelektrode in Gegenwart eines flüssigen Elektrolyten eine elektrische Spannung angelegt wird und die zwischen einer jeweiligen Arbeitselektrode und wenigstens einer Gegenelektrode in Gegenwart des Elektrolyten erzeugten elektrischen Ströme ermittelt werden. Hierbei wird zwischen dem Elektrolyt und den Arbeitselektroden eine Relativgeschwindigkeit erzeugt und werden die hierbei zwischen einer jeweiligen Arbeitselektrode und der Gegenelektrode erzeugten elektrischen Ströme ermittelt. Die Arbeitselektroden werden stationär in einer Messzelle angeordnet, wobei die Messzelle derart kontinuierlich mit dem Elektrolyt durchströmt wird, dass der Elektrolyt jede Arbeitselektrode mit einer laminaren Strömung mit im Wesentlichen derselben Strömungsgeschwindigkeit und demselben Strömungsprofil umströmt. Die Erfindung betrifft ferner eine zur Durchführung eines solchen Verfahrens geeignete Vorrichtung.

EP 4 134 165 A1

**Beschreibung**

Die Erfindung betrifft ein Verfahren zur simultanen Ermittlung der elektrochemischen Aktivität einer Mehrzahl an Materialien, insbesondere Elektrokatalysatoren, indem zwischen einer jeweilige Arbeitselektrode, auf welche das jeweilige Material aufgebracht ist, und einer Referenzelektrode in Gegenwart eines flüssigen Elektrolyts eine elektrische Spannung angelegt wird und die zwischen einer jeweiligen Arbeitselektrode und wenigstens einer Gegenelektrode in Gegenwart des Elektrolyts erzeugten elektrischen Ströme ermittelt werden, wobei

- zumindest zwischen dem Elektrolyt und den Arbeitselektroden eine Relativgeschwindigkeit erzeugt wird und
- die hierbei zwischen einer jeweiligen Arbeitselektrode und der Gegenelektrode erzeugten elektrischen Ströme ermittelt werden.

Die Erfindung bezieht sich ferner auf eine zur Durchführung eines solchen Verfahrens geeignete Vorrichtung zur simultanen Ermittlung der elektrochemischen Aktivität einer Mehrzahl an Materialien, insbesondere Elektrokatalysatoren, umfassend

- eine Mehrzahl an Arbeitselektroden, auf welche das jeweilige Material aufgebracht ist,
- wenigstens eine Gegenelektrode,
- wenigstens eine Referenzelektrode,
- wenigstens eine regelbare Spannungsquelle, insbesondere in Form eines Regelverstärkers, welche einerseits mit einer jeweiligen Arbeitselektrode, andererseits sowohl mit der Gegenelektrode als auch mit der Referenzelektrode in Verbindung steht, um ein jeweiliges Arbeitselektrodenpotential einstellen zu können,
- eine zur Aufnahme eines Elektrolyts geeignete Messzelle, in welcher zumindest die Arbeitselektroden und die Gegenelektrode angeordnet sind, und
- eine Messeinrichtung zur Ermittlung der zwischen einer jeweiligen Arbeitselektrode und der Gegenelektrode erzeugten elektrischen Ströme.

Die Entwicklung und Charakterisierung von Materialien mit hoher elektrochemischer Aktivität und Stabilität für verschiedene elektrochemische Reaktionen, wie insbesondere Elektrokatalysatoren, gewinnen auf dem Gebiet der Elektrochemie in zunehmendem Maße an Bedeutung und stellen das limitierende Element zahlreicher technischer Anwendungen dar, wie beispielsweise für Brennstoffzellen, Elektrolysezellen oder elektrosynthetische Verfahren. Zur Eignungsprüfung solcher - bekannter oder neuartiger - Materialien muss dabei üblicherweise deren elektrochemische Aktivität für die jeweilige chemische Reaktion untersucht werden.

Die elektrochemische Aktivität wird in der Praxis üblicherweise mittels des Verfahrens der rotierenden Scheibenelektrode ("rotating disk electrode", RDE) oder der rotierenden Ringscheibenelektrode ("rotating ring-disk electrode", RRDE) ermittelt, wobei eine ringförmige Arbeitselektrode, auf welche das jeweils zu untersuchende Material, wie beispielsweise ein Elektrokatalysator, insbesondere in Form einer Dünnschicht, aufgebracht worden ist, in einem Elektrolyt rotiert wird und infolge der Rotation einen im Wesentlichen konstanten Stofftransport durch den Elektrolyt erfährt. Der hierbei zwischen der ringförmigen Arbeitselektrode und einer stationären Gegenelektrode erzeugte elektrische Strom kann sodann gemessen und das elektrische Potential der Arbeitselektrode bei dem jeweiligen elektrischen Strom in Bezug auf eine gleichfalls stationäre Referenzelektrode ermittelt werden, was in der Regel mittels zyklischer Voltammetrie geschieht. Über die Änderung der Rotationsgeschwindigkeit kann der Anteil des durch den Massentransport bedingten elektrischen Messstromes variiert werden, welcher insoweit ein Maß für die elektrochemische Aktivität des auf die Arbeitselektrode aufgebrachten Materials darstellt, als dessen elektrochemische Aktivität um so größer ist, je höher der gemessene Strom ist. Ein besonders repräsentatives Maß für die elektrochemische Aktivität dieses Materials stellt hierbei der aus der elektrochemischen Reaktion resultierende kinetische Anteil ($I_{kin}$) des gesamten elektrischen Messstromes ($I_{Mess}$) dar, welcher um den aus dem Massentransport resultierenden Anteil ($I_{MT}$), also um den sogenannten massentransport- oder diffusionslimitierten Anteil, des gesamten elektrischen Messstromes bereinigt worden ist, wobei sich der Reziprokwert des gesamten elektrischen Messstromes ($I_{Mess}$) gemäß der Koutecky-Levich-Gleichung aus der Summe der Reziprokwerte dessen kinetischen Anteils ($I_{kin}$) und dessen Massentransportanteils ($I_{MT}$) ergibt:

$$I_{Mess}^{-1} = I_{kin}^{-1} + I_{MT}^{-1}$$

Der Massentransportanteil ($I_{MT}$) des gesamten elektrischen Messstromes ($I_{Mess}$) kann dabei als Produkt aus der Levich-Konstanten ($B_L$) und der Quadratwurzel der Winkeldrehgeschwindigkeit ($\omega$) der Scheiben- bzw. Scheibenringelektrode ausgedrückt werden:

$$I_{MT} = B_L \cdot \omega^{0,5}$$

Die Levich-Konstante ($B_L$) ergibt sich hierbei aus dem Produkt der Anzahl der übertragenen Elektronen (n), der Faraday-Konstanten (F), der Konzentration des elektrochemisch aktiven Materials (c), der zur Verfügung stehenden Fläche (A) des elektrochemisch aktiven Materials, des Diffusionskoeffizienten des elektrochemisch aktiven Materials (D) hoch 2/3, der kinematischen Viskosität des Elektrolyts ($\eta_y$) hoch -1/6 und einem Faktor:

$$B_L = 0,62 \cdot n \cdot F \cdot c \cdot A \cdot D^{2/3} \cdot \eta_y^{-1/6}$$

Der Unterschied des Verfahrens der rotierenden Ringscheibenelektrode gegenüber dem Verfahren der rotierenden Scheibenelektrode besteht vornehmlich darin, dass im Falle der rotierenden Ringscheibenelektrode eine zusätzliche (zweite) Arbeitselektrode in Form eines Rings zum Einsatz gelangt, welcher die scheibenförmige zentrale (erste) Arbeitselektrode umgibt und von letzterer elektrisch isoliert ist. Hierdurch können zwei Unterschiedliche Potentiale an Scheibe und Ring angelegt werden, was z.B. die Detektion von Intermediaten während der Reaktion ermöglicht.

Ein Nachteil der Verfahren der rotierenden Scheibenelektrode bzw. der rotierenden Scheibenringelektrode besteht indes darin, dass sich die Ermittlung der elektrochemischen Aktivität des jeweiligen zu untersuchenden Materials, welches auf die möglichst inerte und dem Material als Substrat dienenden, rotierenden Arbeitselektrode aufgebracht worden ist, als relativ zeit- und personalintensiv und somit auch als kostenaufwändig erweist, wobei für jede einzeln durchgeführte Untersuchung eine neue Dünnschicht des jeweiligen Materials auf die Arbeitselektrode aufgebracht und diese vermessen werden muss. Insbesondere im Zuge der Entwicklung von weitestgehend edelmetallfreien Elektrokatalysatoren müssen zudem häufig ternäre oder höherwertige Materialsysteme untersucht werden, bei welchen die Stöchiometrie ihrer Bestandteile jeweils geringfügig verändert werden, so dass große Materialbibliotheken erzeugt werden können. Für deren Charakterisierung ergibt sich infolge der Ermittlung der elektrochemischen Aktivität dann insgesamt ein sehr hoher Zeitaufwand und/oder sind viele parallele Messvorgänge erforderlich.

Der Aufsatz "Combinatorial electrochemical screening of fuel cell electrocatalysts" von Samuel Guerin, Brian E. Hayden, Christopher E. Lee, Claire Mormiche, John R. Owen, Andrea E. Russell, Brian Theobald und David Thompsett in J. Comb. Chem. 2004, 6, 1, 149-158 beschreibt eine elektrochemische Screening-Zelle zur Ermittlung der elektrochemischen Aktivität von für Brennstoffzellen geeigneten Elektrokatalysatoren, in welcher eine Mehrzahl an Arbeitselektroden in Form eines 8x8-Elektrodenarrays in einem ruhenden Elektrolyt angeordnet sind. Auf diese Weise ist zwar eine effiziente parallele Untersuchung einer Mehrzahl an verschiedenen Elektrokatalysatoren möglich, doch besteht ein Nachteil gegenüber den vorstehenden beschriebenen Verfahren der rotierenden Scheiben- bzw. Scheibenringelektrode insbesondere darin, dass einerseits mit einer Gasentwicklung einhergehende elektrochemische Reaktionen, wie z.B. Sauerstoff und/oder Wasserstoff freisetzende Reaktionen, welche insbesondere in Bezug auf die Elektrolyse von Wasser eine große Bedeutung besitzen, nicht oder allenfalls nur beschränkt untersucht werden können, weil die entstehenden Gasbläschen die sich in deren unmittelbarer Nachbarschaft befindlichen Arbeitselektroden beeinflussen und nicht abgeführt werden können. Andererseits lässt sich der Massentransport nicht variieren, wie dies im Falle der rotierenden Scheiben- bzw. Scheibenringelektrode durch unterschiedliche Rotationsgeschwindigkeiten geschehen kann, so dass sich keinerlei Aussagen zu dem für die elektrochemische Aktivität der untersuchten Elektrokatalysatoren repräsentativen kinetischen Anteil des gesamten elektrischen Messstromes entsprechend der obigen Koutecky-Levich-Gleichung treffen lassen.

Entsprechendes gilt weitgehend für eine dem Aufsatz "High throughput experimental and theoretical predictive screening of materials - A comparative study of search strategies for new fuel cell anode Catalysts" von Peter Strasser, Qun Fan, Martin Devenney, W. Henry Weinberg, Ping Liu und Jens K. Nørskov in J. Phys. Chem. B 2003, 107, 40, 11013-11021 entnehmbare Vorrichtung zur simultanen Ermittlung der elektrochemischen Aktivität einer Mehrzahl an Elektrokatalysatoren, bei welcher 64 verschiedene Elektrokatalysatoren als Materialbibliothek auf einen Glaswafer gesputtert und mittels Chronoamperometrie in einem ruhenden Elektrolyt untersucht werden. Durch ein mikrokinetisches Modell werden die elektrochemischen Aktivitäten der untersuchten Elektrokatalysatoren bestimmt, wohingegen eine exakte Auswertung gemäß der etablierten Koutecky-Levich-Methode nicht möglich ist.

In der DE 603 17 881 T2 (EP 1 479 121 B1) derselben Autoren geht es um Katalysatoren sowie um mit solchen ausgestattete Brennstoffzellen, wobei zur Ermittlung einer Vorauswahl an potenziell geeigneter Katalysatormaterialien ein Verfahren beschrieben ist, mit welchem die elektrokatalytische Aktivität einer Mehrzahl an verschiedenen Katalysatormaterialien in einer Messzelle simultan bestimmt werden kann. Die Messzelle umfasst wiederum eine Anordnung aus 64 individuell ansteuerbaren Elektroden, die matrixartig in je 8 Reihen und Spalten angeordnet sind und durch einen hinreichenden Abstand sowohl voneinander als auch von einem Substrat isoliert sind. Anlässlich der Messung wird die matrixartige Elektrodenanordnung oberhalb einer mit Schaufeln versehenen Rotorwelle angeordnet, welche bei einer konstanten Drehzahl zwischen 300 U/min und 400 U/min rotiert wird, um zwecks erzwungener Konvektions-/Diffusionsbewegungen den Elektrolyt mit einer Relativgeschwindigkeit gegenüber der Elektrodenanordnung der Messzelle zu beaufschlagen. Neben einem äußerst komplexen Aufbau der Messzelle, welche zur individuellen Ansteuerung der Elektroden z.B. einen teuren Multipotentiostaten mit 64 Kanälen erfordert, eignet sich die Messzelle allenfalls zur qualitativen Voruntersuchung von Materialien, welche insbesondere wegen der nicht reproduzierbaren und höchst unterschiedlichen Messbedingungen einer jeweiligen Elektrode des 8x8-Arrays keine quantitativen und vergleichbaren Aussagen zulässt.

Aus dem Aufsatz "A scanning flow cell system for fully automated screening of electrocatalyst materials" von Anna K. Schuppert, Angel A. Topalov, Ioannis Katsounaros, Sebastian O. Klemm und Karl J. J. Mayrhofer in Journal of The Electrochemical Society 159 (11), 2012, F670-F675 ist eine Messzelle zum sequentiellen automatisierten Screening der elektrochemischen Aktivität von Elektrokatalysatoren bekannt, bei welcher in einem beweglichen Messkopf sowohl die Gegenelektrode als auch die Referenzelektrode angeordnet sind. Der Messkopf kann mit einem Elektrolyt mit verschiedenen Strömungsgeschwindigkeiten durchströmt werden, wobei er über ein Platinplättchen bewegt wird, welches als Arbeitselektrode dient und mit dem jeweils zu untersuchenden Elektrokatalysator beschichtet ist. Auf diese Weise lässt sich zwar - insoweit in Analogie zu den üblichen Verfahren der rotierenden Scheiben- bzw. Ringscheibenelektrode - der für die elektrochemische Aktivität der untersuchten Elektrokatalysatoren repräsentative kinetische Anteil des gesamten elektrischen Messstromes entsprechend der obigen Koutecky-Levich-Gleichung ermitteln, doch gilt in Bezug auf die Nachteile ähnliches wie für die rotierende Scheiben- bzw. Ringscheibenelektrode, wobei zur sequentiellen Ermittlung der elektrochemischen Aktivität der untersuchten Materialien ein hoher Zeit- und Personalaufwand anfällt. Zudem erweist sich der Aufbau der Messzelle als relativ aufwändig und können die Messergebnisse aufgrund sich ändernder und nicht definierbarer Strömungsprofile des Elektrolyts in dem Messkopf verfälscht werden.

Der Aufsatz "Array membrane electrode assemblies for high throughput screening of direct methanol fuel cell anode catalysts" von Liu Renxuan und Eugene S. Smotkin in Journal of Electroanalytical Chemistry 535 (1-2), 2002, 49-55 beschreibt schließlich ein in-situ-Verfahren zur Ermittlung der elektrochemischen Aktivität von Elektrokatalysatoren in Direktmethanol-Brennstoffzellen, wobei auf den einzelnen Elektroden insgesamt 25 verschieden mit einem Elektrokatalysator beschichtete Gasdiffusionsschichten aufgebracht werden, welche mit 25 Messelektroden sowie mit der Membranelektrodeneinheit in Verbindung stehen. Die sich bei den jeweiligen Polarisationskurven einstellenden elektrischen Ströme der einzelnen Messelektroden werden durch mehrere Transimpedanzwandler gemessen. Allerdings ist das bekannte Verfahren auf die Untersuchung von Direktmethanol-Brennstoffzellen beschränkt.

Der Erfindung liegt die Aufgabe zugrunde, ein Verfahren und eine Vorrichtung zur simultanen Ermittlung der elektrochemischen Aktivität einer Mehrzahl an Materialien, insbesondere Elektrokatalysatoren, der eingangs genannten Art auf einfache und kostengünstige Weise unter zumindest weitestgehender Vermeidung der vorgenannten Nachteile dahingehend weiterzubilden, dass eine sowohl in handhabungstechnischer als auch in vorrichtungstechnischer Hinsicht einfache und schnelle simultane Ermittlung der elektrochemischen Aktivität der Materialien gewährleistet wird.

In verfahrenstechnischer Hinsicht wird diese Aufgabe bei einem Verfahren der eingangs genannten Art dadurch gelöst, dass die Arbeitselektroden stationär in einer Messzelle angeordnet werden und die Messzelle derart kontinuierlich mit dem Elektrolyt durchströmt wird, dass der Elektrolyt jede Arbeitselektrode mit einer laminaren Strömung mit im Wesentlichen derselben Strömungsgeschwindigkeit und demselben Strömungsprofil umströmt.

In vorrichtungstechnischer Hinsicht sieht die Erfindung zur Lösung dieser Aufgabe bei einer zur Durchführung eines solchen Verfahrens geeigneten Vorrichtung der eingangs genannten Art ferner vor, dass die Arbeitselektroden stationär in der Messzelle angeordnet sind, wobei die Messzelle wenigstens einen Einlass und wenigstens einen Auslass aufweist, und wobei der Messzelle eine Pumpe zugeordnet ist, um die Messzelle kontinuierlich mit einer laminaren Strömung des Elektrolyts zu durchströmen.

Die erfindungsgemäße Ausgestaltung zeichnet sich insoweit von einer Abkehr des herkömmlichen Verfahrens der rotierenden Scheiben- bzw. Scheibenringelektrode aus, als die erforderliche Relativgeschwindigkeit zwischen der mit dem jeweils zu untersuchenden Material beschichteten Arbeitselektrode und dem flüssigen Elektrolyt nicht durch Rotieren der Arbeitselektrode erreicht wird, sondern durch eine im Wesentlichen lineare und insbesondere laminare Anströmung der Arbeitselektrode mit dem die Messzelle durchströmenden Elektrolyt, so dass an allen Arbeitselektroden der gleiche Massentransport infolge erzwungener Konvektion herrscht. Auf diese Weise ist es bei einem sehr einfachen und kostengünstigen Aufbau der erfindungsgemäßen Vorrichtung möglich, eine Mehrzahl an Arbeitselektroden in kompakter Bauweise in einer gemeinsamen Messzelle, also in einem gemeinsamen Strömungskanal, anzuordnen, ohne dass das laminare Strömungsprofil um eine Arbeitselektrode aufgrund der Umströmung einer benachbarten Arbeitselektrode verändert wird, d.h. alle Arbeitselektroden werden in gleicher Weise laminar mit dem Elektrolyt umströmt, um für vergleichbare Messergebnisse zu sorgen. Folglich kann die elektrochemische Aktivität einer Mehrzahl an verschiedenen Materialien in zeiteffizienter Weise und mit minimalem vorrichtungstechnischen Aufwand mit sehr hoher Genauigkeit, Vergleichbarkeit und Reproduzierbarkeit simultan ermittelt werden, ohne dass den zu untersuchenden Materialien einschließlich potentiellen Elektrokatalysatoren Grenzen gesetzt sind. Ein weiterer Vorteil der simultanen Untersuchung der elektrochemischen Aktivität der jeweiligen Materialien besteht auch darin, dass die elektrochemisch aktiven Materialien immer zur gleichen Zeit in demselben Elektrolyt untersucht werden und sich somit keine Abweichungen aufgrund auch nur geringfügig unterschiedlicher Versuchsbedingungen ergeben, wie z.B. durch neu angesetzte Elektrolyts, leicht unterschiedliche Aufbringung der elektrochemisch aktiven Materialien auf die Arbeitselektroden bei mehreren Durchgängen usw.

Den Arbeitselektroden kann dabei in als solches bekannter Weise je eine oder vorzugsweise eine gemeinsame Gegenelektrode zugeordnet sein, welche zweckmäßigerweise - in Strömungsrichtung des Elektrolyts betrachtet - stromab der Arbeitselektroden angeordnet ist, um die Strömungsgeschwindigkeit bzw. das Strömungsprofil des Elektrolyts nicht zu beeinflussen. Entsprechendes gilt für die Referenzelektrode, welche gleichfalls auslassseitig in der Messzelle oder erfindungsgemäß insbesondere auch - wie weiter unten noch näher erläutert - außerhalb der Messzelle angeordnet sein kann, wie beispielsweise in einem den Elektrolyt aufnehmenden Reservoir.

Ein weiterer Vorteil der erfindungsgemäßen Ausgestaltung besteht darin, dass aufgrund dessen, dass die Messzelle mittels der Pumpe kontinuierlich von ihrem Einlass in Richtung ihres Auslasses mit einer laminaren Strömung des Elektrolyts durchströmt wird, der Messzelle also stets frischer Elektrolyt zugeführt wird, die chemische Zusammensetzung des Elektrolyts über die Messdauer konstant bleibt und nicht etwa eine auch nur lokale Verarmung an den zur Verfügung stehenden Reaktanden und/oder eine Kontamination mit anlässlich der elektrochemischen Reaktion der auf die Arbeitselektroden aufgebrachten Materialien erzeugten Produkten eintritt, wie es bei einem batchweisen Betrieb (z. B. bei den bekannten Verfahren der rotierenden Scheiben- bzw. Ringscheibenelektrode) oder auch bei einer Kreislaufführung des Elektrolyts der Fall wäre und unterschiedliche Auswirkungen auf die Messergebnisse der verschiedenen, zu untersuchenden Materialien besitzen könnte. Darüber hinaus können anlässlich der elektrochemischen Reaktion gebildete Gasbläschen kontinuierlich von den Arbeitselektroden abgeführt werden, ohne die anderen Arbeitselektroden zu beeinflussen.

Wie weiter unten im Einzelnen erläutert, macht es die erfindungsgemäße Ausgestaltung schließlich insbesondere möglich, durch eine hydrodynamische Charakterisierung der kontinuierlich mit dem Elektrolyt durchflossenen Messzelle den aus der jeweiligen elektrochemischen Reaktion resultierenden kinetischen Anteil ($I_{kin}$) des an einer jeweiligen Arbeitselektrode gemessenen gesamten elektrischen Messstromes ($I_{Mess}$), welcher - wie oben erwähnt - ein besonders repräsentatives Maß für die elektrochemische Aktivität des jeweiligen Materials darstellt, in Analogie zu der eingangs erwähnten Koutecky-Levich-Methode zu ermitteln, d.h. der aus der elektrochemischen Reaktion resultierende kinetische Anteil ($I_{kin}$) des gesamten elektrischen Messstromes ($I_{Mess}$) kann um den aus dem Massentransport resultierenden Anteil ($I_{MT}$), d.h. um den sogenannten massentransport- oder diffusionslimitierten Anteil, des gesamten elektrischen Messstromes ($I_{Mess}$) bereinigt werden. Dabei ergibt sich der Reziprokwert des gesamten elektrischen Messstromes ($I_{Mess}$) wiederum gemäß der Koutecky-Levich-Gleichung aus der Summe der Reziprokwerte dessen kinetischen Anteils ($I_{kin}$) und dessen Massentransportanteils ($I_{MT}$):

$$I_{Mess}^{-1} \; = \; I_{kin}^{-1} \; + \; I_{MT}^{-1}$$

Während der kinetische Anteil ($I_{kin}$) nicht von der Strömungsgeschwindigkeit des Elektrolyts in der Messzelle abhängt, ist der Massentransportanteil ($I_{MT}$), d.h. der sogenannte massentransportlimitierte Anteil ($I_{MT}$), von der Strömungsgeschwindigkeit des Elektrolyts abhängig und kann somit einerseits in Abhängigkeit der bei der jeweiligen Strömungsgeschwindigkeit des Elektrolyts herrschenden Reynolds-Zahl (Re), wobei:

$$Re \; = \; \rho \; \cdot \; w \; \cdot \; L \; \cdot \; \eta^{-1}$$

mit

$\rho$: Dichte des Elektrolyts,
w: mittlere Strömungsgeschwindigkeit des Elektrolyts,
L: charakteristische Länge der jeweiligen, von dem Elektrolyt umströmten Arbeitselektrode, und
$\eta$: dynamische Viskosität des Elektrolyts,

andererseits in Abhängigkeit der Sherwood-Zahl (Sh) beschrieben werden, wobei:

$$Sh \; = \; \beta \; \cdot \; L \; \cdot \; D^{-1}$$

mit

$\beta$: Stoffübergangskoeffizient zwischen dem Elektrolyt und der jeweiligen Arbeitselektrode,

L: charakteristische Länge der jeweiligen, von dem Elektrolyt umströmten Arbeitselektrode, und

D: Diffusionskoeffizient.

Um sicherzustellen, dass die Strömungsgeschwindigkeit des Elektrolyts um alle Arbeitselektroden im Wesentlichen konstant ist und das laminare Strömungsprofil um eine jeweilige Arbeitselektrode nicht durch andere Arbeitselektroden oder auch durch die Wandung der Messzelle beeinflusst wird, können die Arbeitselektroden zweckmäßigerweise in der Messzelle in Wenigstens einer Reihe angeordnet werden, wobei sich die Reihe an mit Abstand voneinander angeordneter Arbeitselektroden insbesondere im Wesentlichen senkrecht zur Strömungsrichtung des Elektrolyts erstreckt. Darüber hinaus erweist es sich in diesem Zusammenhang als vorteilhaft, wenn die Arbeitselektroden in der Messzelle im Wesentlichen äquidistant voneinander angeordnet werden, wobei die jeweiligen äußeren Arbeitselektroden insbesondere mit einem Abstand von der Wandung der Messzelle angeordnet werden, welcher im Wesentlichen dem Abstand zwischen den Arbeitselektroden entspricht, so dass das laminare Strömungsprofil um eine jeweilige Arbeitselektrode nicht durch benachbarte Arbeitselektroden oder die Wandung der Messzelle beeinflusst wird.

In vorrichtungstechnischer Hinsicht kann folglich vorteilhafterweise vorgesehen sein, dass die Arbeitselektroden in der Messzelle

- in Wenigstens einer Reihe angeordnet sind, wobei sich die Reihe an mit Abstand voneinander angeordneter Arbeitselektroden insbesondere im Wesentlichen senkrecht zur Strömungsrichtung des Elektrolyts erstreckt, und/oder
- im Wesentlichen äquidistant voneinander angeordnet sind, wobei die jeweiligen äußeren Arbeitselektroden insbesondere mit einem Abstand von der Wandung der Messzelle angeordnet sind, welcher im Wesentlichen dem Abstand zwischen den Arbeitselektroden entspricht.

Des Weiteren kann es sich in diesem Zusammenhang als zweckmäßig erweisen, wenn die Arbeitselektroden im Wesentlichen bündig mit der Wandung der Messzelle abschließen, so dass das laminare Strömungsprofil im Messkanal der Messzelle nicht negativ beeinflusst wird.

Wie bereits angedeutet, kann in vorteilhafter Ausgestaltung vorgesehen sein, dass die Referenzelektrode außerhalb der Messzelle in dem im Wesentlichen ruhenden Elektrolyt angeordnet wird, so dass sich die Referenzelektrode nicht innerhalb des Elektrolytstromes befindet und sich das Elektrodenpotential der Arbeitselektroden somit nicht mit der Strömungsgeschwindigkeit verschieben kann.

In vorrichtungstechnischer Hinsicht kann demnach vorzugsweise vorgesehen sein, dass die Referenzelektrode außerhalb der Messzelle angeordnet ist, wie insbesondere in einem zur Bevorratung des Elektrolyts dienenden Reservoir, in einem Bypass oder dergleichen. Ein weiterer Vorteil eines solchen Elektrolytreservoirs besteht darin, dass der in dem Reservoir auf Vorrat gehaltene Elektrolyt in dem Reservoir gesättigt und/oder inertisiert werden kann, z.B. mit einem Inertgas, Sauerstoff oder dergleichen, bevor er mittels der Pumpe in den Einlass der Messzelle überführt wird. Überdies kann das Reservoir z.B. temperierbar sein.

Darüber hinaus hat es sich als vorteilhaft erwiesen, wenn die Summe der Oberflächen der Arbeitselektroden kleiner ist als die Oberfläche der Gegenelektrode.

Um den aus der elektrochemischen Reaktion resultierenden kinetischen Anteil ($I_{kin}$) des gesamten elektrischen Messstromes ($I_{Mess}$), d.h. den um den aus dem Massentransport resultierenden Anteil ($I_{MT}$) des gesamten elektrischen Messstromes ($I_{Mess}$) bereinigten Anteil des Messstromes, mit sehr hoher Genauigkeit ermitteln zu können, werden die Arbeitselektroden erfindungsgemäß - wie bereits erwähnt - mit einer laminaren Strömung des Elektrolyts umströmt, welche - wie weiter unten noch näher erläutert - zweckmäßigerweise bei verschiedenen Strömungsgeschwindigkeiten variiert werden kann. Die zur Durchströmung der Messzelle mit dem Elektrolyt dienende Pumpe sollte hierfür zweckmäßigerweise steuerbar und/oder regelbar sein, um die laminare Strömungsgeschwindigkeit des Elektrolyts in der Messzelle einzustellen und/oder zu variieren und somit den Massentransport nach Art einer erzwungene Konvektion einzustellen bzw. zu variieren. Darüber hinaus handelt es sich bei der Pumpe vorzugsweise um eine pulsationsarme Pumpe, um für eine gleichmäßige und insbesondere laminare Durchströmung der Messzelle mit der jeweils gewünschten Strömungsgeschwindigkeit zu sorgen und auf diese Weise die Relativgeschwindigkeit bzw. den Massentransport zwischen dem Elektrolyts und der jeweiligen Arbeitselektroden einstellen zu können.

In verfahrenstechnischer Hinsicht wird die zwischen einer jeweilige Arbeitselektrode, auf welche das jeweilige Material aufgebracht ist, und einer Referenzelektrode angelegte elektrische Spannung vorzugsweise, insbesondere im Wesentlichen sägezahn- oder sinusförmig, variiert und werden die zwischen einer jeweiligen Arbeitselektrode und der Gegenelektrode hierdurch erzeugten elektrischen Ströme infolge der chemischen Reaktionen der an den Arbeitselektroden abgeschiedenen Materialien ermittelt, wie es als solches bei der zyklischen Voltammetrie bekannt ist.

In weiterhin vorteilhafter Ausgestaltung kann vorgesehen sein, dass zur Ermittlung der elektrischen Strom-/Spannungscharakteristik einer jeweiligen Arbeitselektrode

- die Strömungsgeschwindigkeit des Elektrolyts in der Messzelle variiert wird und

- die hierbei erzeugten elektrischen Ströme in Abhängigkeit des jeweiligen Arbeitselektrodenpotentials bei einer jeweiligen Strömungsgeschwindigkeit des Elektrolyts zwischen einer jeweiligen Arbeitselektrode und der Gegenelektrode ermittelt werden,

wobei für die Arbeitselektroden jeweils eine Strom-Potential-Kurve erstellt wird. Dabei wird zweckmäßigerweise an allen Arbeitselektroden dieselbe elektrische Spannung gegenüber der Referenzelektrode vorgegeben, was beispielsweise mittels eines Potentionstaten mit einer Mehrzahl an identischen Ausgängen für die Arbeitselektroden, einem als solchen üblichen hochohmigen Ausgang für die Referenzelektrode und einem ebenfalls als solchen üblichen Ausgang für die Gegenelektrode geschehen kann, so dass die Strom-Potential-Kurven der Arbeitselektroden insbesondere mittels zyklischer Voltammetrie ermittelt werden können.

Die regelbare Spannungsquelle der erfindungsgemäßen Vorrichtung kann folglich vorzugsweise einen Potentiostaten umfassen, welcher einerseits die elektrische Spannung zwischen den Arbeitselektroden und der Referenzelektrode über den elektrischen Strom zwischen den Arbeitselektroden und der Gegenelektrode regelt, andererseits den elektrischen Strom der Arbeitselektroden erfasst. Die Arbeitselektroden können hierbei vorzugsweise unter Zwischenschaltung jeweils eines Transimpedanzverstärkers mit dem Potentiostaten in Verbindung stehen, um eine genaue Erfassung auch relativ geringer elektrischer Ströme der Arbeitselektroden zu gewährleisten.

Wie weiter oben erwähnt, macht es das erfindungsgemäße Verfahren - insoweit in Analogie zu den bekannten Verfahren der rotierenden Scheiben- bzw. Ringscheibenelektrode - insbesondere möglich, dass der jeweils ermittelte elektrische Strom ($I_{Mess}$) einer jeweiligen Arbeitselektrode um den von der Strömungsgeschwindigkeit des Elektrolyts in Bezug auf die jeweilige Arbeitselektrode abhängigen Massentransportanteil ($I_{MT}$), d.h. um den sogenannten massentransport- oder diffusionslimitierten Anteil, des elektrischen Stromes bereinigt wird, um den kinetischen Anteil ($I_{kin}$) des elektrischen Stromes einer jeweiligen Arbeitselektrode zu bestimmen.

Der für die elektrochemische Aktivität des jeweils untersuchten Materials als repräsentatives Maß dienende kinetische Anteil ($I_{kin}$) des elektrischen Stromes einer jeweiligen Arbeitselektrode kann hierbei insbesondere unter Verwendung der Koutecky-Levich-Gleichung bestimmt werden, wobei eine alternative Beschreibung des Massentransportanteils ($I_{MT}$) des elektrischen Stromes analog dem Verfahren der rotierenden Scheibenelektrode herangezogen werden kann. Analog dem Verfahren der rotierenden Scheiben- bzw. Ringscheibenelektrode kann dabei für die Bestimmung des kinetischen Stromanteils ($I_{kin}$) nach der Koutecky-Levich-Methode für die jeweilige Messvorrichtung eine analytische Beschreibung des Massentransportanteils ($I_{MT}$) des elektrischen Stromes erfolgen. So kann der konvektive Stofftransport in der Messzelle über das allgemeine Potenzgesetz beschrieben werden:

$$\text{\underline{allgemeines Potenzgesetz:}} \quad Sh = K \cdot Re^a \cdot Sc^b \cdot \Gamma^c$$

wobei:

| | |
|---|---|
| Sh: | Sherwood-Zahl; |
| K, a, b, c: | von der Strömung des Elektrolyts und von der Geometrie der Messzelle abhängige Konstanten, welche experimentell ermittelt werden; |
| Re: | Reynolds-Zahl; |
| Sc: | Schmidt-Zahl; |
| $\Gamma$: | Geometriezahl. |

Die Sherwood-Zahl Sh gibt das Verhältnis zwischen der effektiv übergehenden Stoffmenge des elektrochemisch aktiven Materials zu der durch reine Diffusion transportierten Stoffmenge an. Diese ist abhängig von der Reynolds-Zahl Re, von der Schmidt-Zahl Sc sowie von dem Geometriefaktor $\Gamma$. Mit den Parametern K, a, b und c werden Randbedingungen bzw. Strömungseigenschaften in Bezug auf die durchströmte Geometrie der Messzelle beschrieben. Die Reynolds-Zahl für einen Strömungskanal, wie er in der Messzelle gebildet ist, kann durch die folgende Formel beschrieben werden:

$$Re = \frac{2\varrho\dot{V}}{\eta_{\text{fluid}} w_{\text{ch}}}$$

wobei:

Re:     Reynolds-Zahl;

$\rho$: Dichte des verwendeten Elektrolyts;

V: Volumenstrom bzw. Flussrate des Elektrolyts;

$\eta$: kinematische Viskosität des verwendeten Elektrolyts;

$\overline{\omega}_{ch}$: Kanalbreite in der Messzelle.

Für Reynolds-Zahlen von kleiner etwa 2300 befindet sich die Elektrolytströmung in der Messzelle bzw. in deren Strömungskanal im laminaren Bereich. Dies ist für eine präzise Messung von Vorteil, damit stets ein kontinuierlicher und geordneter Stofftransport zu den Arbeitselektroden gewährleistet ist. Die Schmidt-Zahl Sc ergibt sich aus der kinematischen Viskosität $\nu$ und dem Diffusionskoeffizienten D des verwendeten Elektrolyts:

$$Sc = \frac{\nu}{D}$$

Mit der Geometriezahl $\Gamma$ kann das Verhältnis des hydrodynamischen Durchmessers $d_H$ zur Elektrodenlänge $L_{el}$ des in der Messzelle ausgebildeten Messkanals beschrieben werden:

$$\Gamma = \frac{d_H}{L_{el}}$$

Der hierin enthaltene hydrodynamische Durchmesser $d_H$ kann allein durch die Kanalhöhe $h_{ch}$ und die Kanalbreite $w_{ch}$ in der Messzelle bestimmt werden:

$$d_H = \frac{2 \cdot h_{ch} \cdot w_{ch}}{h_{ch} + w_{ch}}$$

Die obige Formel des allgemeinen Potenzgesetzes kann nun wie folgt vereinfacht ausgedrückt werden:

$$Sh = x \cdot Re^{a}$$

wobei:

Sh: Sherwood-Zahl;

Re: Reynolds-Zahl;

a: von der Strömung des Elektrolyts und von der Geometrie der Messzelle abhängige Variable, welche experimentell ermittelt wird;

x: zusammengefasste Variable, bestehend aus den Konstanten K, $Sc^b$ und $\Gamma^c$ des allgemeinen Potenzgesetzes (siehe oben), welche experimentell bestimmt wird.

Anlässlich einer hydrodynamischen Charakterisierung der Messzelle können die Variablen x und a des obigen Zusammenhangs der Sherwood-Zahl Sh mit der Reynolds-Zahl Re nun mittels elektrochemischer Messung unter Verwendung eines Modellelektrolytsystems bestimmt werden, wobei mit Hilfe des gezeigten Ansatzes über das allgemeine Potenzgesetz (siehe oben) und der alternativen Beschreibung der Sherwood-Zahl Sh in Abhängigkeit von der Reynolds-Zahl Re der Massentransportanteil ($I_{MT}$) des elektrischen Messstromes ($I_{Mess}$) für elektrochemische Systeme beschrieben werden kann. Für die Anwendung der alternativen Beschreibung des Massentransportanteils ($I_{MT}$) werden mittels der hydrodynamischen Charakterisierung die unbekannten Variablen einer Gleichung ermittelt, welche insbesondere durch die durchströmte Geometrie der Messzelle sowie durch die Strömungsparameter des Elektrolyts bestimmt werden. Auf diese Weise kann ein direkter Zusammenhang zwischen der Reynolds-Zahl Re bzw. der Strömungsgeschwindigkeit des Elektrolyts und dem Massentransportanteil ($I_{MT}$) des elektrischen Messstromes ($I_{Mess}$) erzeugt werden, welcher die Anwendung der Koutecky-Levich-Gleichung ermöglicht.

Die hydrodynamische Charakterisierung der Messzelle kann ähnlich wie beispielsweise in dem Aufsatz "Mass Transport in the Rectangular Channel of a Filter Press Electrolyzer (the FM01 LC Reactor)" von M. Griffiths, C.P. León und F. C. Walsh, AIChE Journal 2005, Vol. 51, No. 2 beschrieben geschehen, wobei für den Massentransportanteil ($I_{MT}$) des elektrischen Stromes der folgende Zusammenhang herangezogen werden kann:

$$Sh = x * Re^a \leftrightarrow Sh = \frac{I_{MT} * d_h}{z * F * c * D * A}$$

wobei:

Sh:  Sherwood-Zahl;

x:  zusammengefasste Variable, umfassend: K, $Sc^b$ und $\Gamma^c$, welche experimentell bestimmt wird;

a:  Variable, welche abhängig ist von der Geometrie der Messzelle sowie den Strömungseigenschafen und ebenfalls experimentell bestimmt wird;

$I_{MT}$:  Massentransportanteil des elektrischen Stromes;

$d_h$:  hydrodynamischer Durchmesser des Strömungskanals in der Messzelle;

z:  Ladungszahl;

F:  Faraday-Konstante;

c:  Konzentration des jeweils zu untersuchenden elektrochemisch aktiven Materials;

D:  Diffusionskoeffizient;

A:  Elektrodenfläche, welche mit dem elektrochemisch aktiven Material beschichtet worden ist.

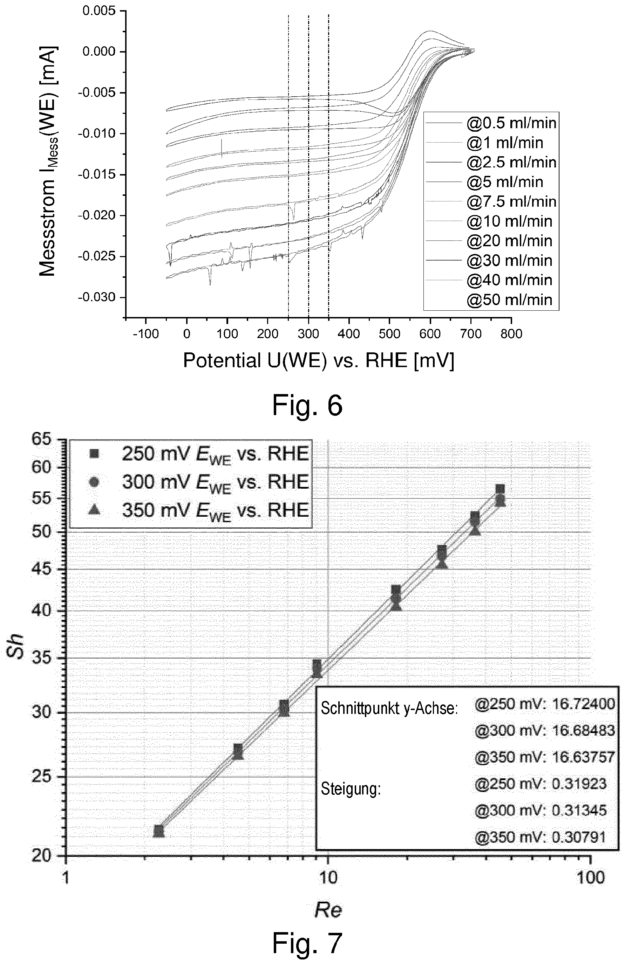

Mittels der hydrodynamischen Charakterisierung werden die unbekannten Variablen x und a der obigen Formel bestimmt. Hierzu werden die Massentransport-limitierten Grenzströme eines Modellelektrolytsystems (z.B. in Form einer wässrigen Lösung aus Kaliumhexacyanidoferrat(III)) bei verschiedenen Strömungsgeschwindigkeiten bzw. Reynolds-Zahlen des Elektrolyts in der Messzelle bestimmt, wie es weiter unten unter Bezugnahme auf die Fig. 6 näher erläutert ist. Die Massentransport-limitierten Ströme ($I_{MT}$) werden dabei jeweils mittels Zyklovoltammetrie über das sich ausbildende Grenzstromplateau bei starker Polarisierung der Arbeitselektroden im Grenzstrompotentialbereich bestimmt. Die Grenzströme werden mit der vorgenannten Formel mit den entsprechenden Stoffdaten des Modellelektrolytsystems in die dimensionslose Sherwood-Zahl umgerechnet. Aus den derart erhaltenen Sherwood-Zahl/Reynolds-Zahl-Datenpaaren wird ein doppeltlogarithmischer Auftrag für ein Potential im Grenzstrompotentialbereich erstellt, wie es weiter unten unter Bezugnahme auf die Fig. 7 beispielhaft für drei Potentiale erläutert ist. Mittels einer linearen Regression des Auftrags können mittels der Formel

$$log(Sh) = a \cdot log(Re) + log(x)$$

die beiden unbekannten Variablen "a" und "x" bestimmt werden. Nach der allgemein bekannten Geradengleichung entspricht dabei "a" der Geradensteigung und entspricht "x" dem Schnittpunkt der Geraden mit der y-Achse. Durch die experimentelle Ermittlung dieser Parameter werden die letzten strömungs- und geometrieabhängigen Variablen der oben genannten Formel eliminiert, so dass eine analytische Beschreibung des Massentransportanteils ($I_{MT}$) des elektrischen Stromes erfolgen kann. Dies eröffnet analog dem Verfahren der rotierenden Scheibenelektrode die Auswertung des gemessenen Stromes ($I_{Mess}$) nach der Koutecky-Levich-Methode zur Bestimmung des kinetischen Stromanteils ($I_{kin}$) über die Korrektur des gemessenen Stromes ($I_{Mess}$) um den aus Massentransport resultierenden Stromanteil ($I_{MT}$).

In vorrichtungstechnischer Hinsicht kann in diesem Zusammenhang gemäß einer vorteilhaften Weiterbildung vorgesehen sein, dass die Vorrichtung ferner eine Datenerfassungs- und -auswerteeinheit aufweist, welche zur Ermittlung der elektrischen Strom-/Spannungscharakteristik einer jeweiligen Arbeitselektrode ausgebildet ist. Die Datenerfassungs- und -auswerteeinheit kann dabei beispielsweise einerseits eine PCI-Messkarte zur Aufzeichnung der durch Strom-/Spannungswandlung eines jeweiligen Transimpedanzverstärkers für eine jeweilige Arbeitselektrode erhaltenen elektrischen Spannungswerte, andererseits eine hiermit in Verbindung stehende elektronische Datenverarbeitungseinheit umfassen, welche mit einem entsprechenden Auswerteprogramm, wie z.B. LabVIEW, eingerichtet ist.

Die Datenerfassungs- und -auswerteeinheit kann dabei vorzugsweise auch zur Bereinigung des jeweils ermittelten elektrischen Stromes ($I_{Mess}$) einer jeweiligen Arbeitselektrode (WE) um den von der Strömungsgeschwindigkeit des Elektrolyts in Bezug auf die jeweilige Arbeitselektrode abhängigen Massentransportanteil ($I_{MT}$) des elektrischen Stromes ausgebildet ist, um den kinetischen Anteil ($I_{kin}$) des elektrischen Stromes einer jeweiligen Arbeitselektrode zu bestimmen, insbesondere unter Verwendung der Koutecky-Levich-Gleichung.

Weitere Merkmale und Vorteile der Erfindung ergeben sich aus der nachfolgenden Beschreibung von Ausführungsbeispielen unter Bezugnahme auf die Zeichnungen. Dabei zeigen:

Fig. 1    eine schematische Ansicht zur Veranschaulichung des Aufbaus einer Ausführungsform einer erfindungsgemäßen Vorrichtung zur Ermittlung der elektrochemischen Aktivität von Materialien;

Fig. 2    eine schematische Ansicht zur Veranschaulichung des Aufbaus der Messzelle einschließlich des Messsystems der Vorrichtung gemäß Fig. 1;

Fig. 3    eine schematische perspektivische Ansicht der Messzelle der Vorrichtung gemäß Fig. 1 und 2 einschließlich der Arbeitselektroden, der Gegenelektrode und der Referenzelektrode;

Fig. 4    eine schematische Draufsicht auf die Messzelle gemäß Fig. 3 zur Veranschaulichung der Anordnung der Arbeitselektroden und der Gegenelektrode;

Fig. 5    eine schematische Draufsicht auf eine gegenüber der Messzelle gemäß Fig. 4 abgewandelte Ausführungsform einer Messzelle;

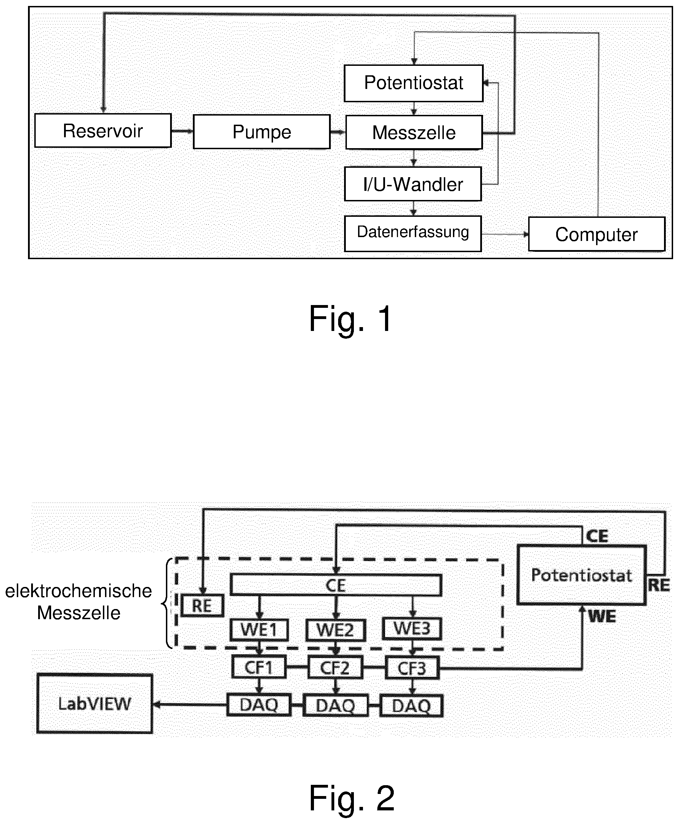

Fig. 6    ein Schaubild der mittels der Vorrichtung gemäß Fig. 1 bis 4 ermittelten Messströme $I_{Mess}$ einer Arbeitselektrode in Abhängigkeit der Spannung U bei verschiedenen Durchflussgeschwindigkeiten des Elektrolyts durch die Messzelle, welches beispielhaft die aus der Verwendung eines Modellelektrolytsystems - hier: in Form einer Lösung aus Kaliumhexacyanidoferrat(III) - resultierenden Zyklovoltammogramme bei der hydrodynamischen Charakterisierung zeigt, wobei die in der Fig. 6 strichlinierten vertikalen Linien die drei Grenzstrompotentiale - hier: bei einem Potential von 250 mV, 300 mV bzw. 350 mV - an der Arbeitselektrode veranschaulichen, bei welchen ein Exponentialzusammenhang gefittet wurde;

Fig. 7    ein Schaubild zur Veranschaulichung der mittels der Vorrichtung gemäß Fig. 1 bis 4 ermittelten Sherwood-Zahl (Sh) in Abhängigkeit der ReynoldsZahl (Re) zur Bestimmung der Koeffizienten des allgemeinen Potenzgesetzes zur Beschreibung des Massentransportanteils $I_{MT}$ des elektrischen Stromes $I_{Mess}$ anlässlich der hydrodynamischen Charakterisierung der Messzelle;

Fig. 8    ein Schaubild der mittels der Vorrichtung gemäß Fig. 1 bis 4 ermittelten Messströme $I_{Mess}$ einer Arbeitselektrode in Abhängigkeit der Spannung U bei verschiedenen Durchflussgeschwindigkeiten des Elektrolyts durch die Messzelle; und

Fig. 9    ein Schaubild der mittels der Vorrichtung gemäß Fig. 1 bis 4 ermittelten kinetischen Anteile $I_{kin}$ der Messströme $I_{Mess}$ mehrerer Arbeitselektroden in Abhängigkeit der Spannung.

In der Fig. 1 ist der allgemeine Aufbau einer erfindungsgemäßen Vorrichtung zur simultanen Ermittlung der elektrochemischen Aktivität von Materialien, wie beispielsweise Elektrokatalysatoren oder dergleichen, anhand eines Blockschaubildes schematisch wiedergegeben. Die Vorrichtung umfasst hierbei eine weiter unten unter Bezugnahme auf die Fig. 2 bis 4 näher beschriebene Messzelle, welche kontinuierlich mit einer laminaren Durchströmung eines Elektrolyts mit variabler Strömungsgeschwindigkeit beaufschlagbar ist. Zu diesem Zweck ist der Messzelle - im vorliegenden Fall z.B. einlassseitig - eine steuer- und/oder regelbare Pumpe zugeordnet, welche mit einem zur Aufnahme des Elektrolyts dienenden Reservoir in Verbindung steht, welches mittels einer nicht zeichnerisch dargestellten Temperiereinrichtung gegebenenfalls beheizbar und/oder kühlbar sein kann. Darüber hinaus kann der Elektrolyt in dem Reservoir mit Gasen gesättigt werden, wie beispielsweise mit Inertgasen, z.B. Argon oder dergleichen, Sauerstoff, z.B. im Falle einer Sauerstoffreduktionsreaktion, etc.

Wie insbesondere auch aus der Fig. 2 hervorgeht, sind in der Messzelle einer Mehrzahl an - hier beispielsweise drei - Arbeitselektroden WE angeordnet, auf welche das zu untersuchende Material z.B. in Form einer Dünnschicht aufgebracht worden ist. Darüber hinaus befindet sich in der Messzelle eine den Arbeitselektroden WE gemeinsame Gegenelektrode CE sowie eine Referenz- bzw. Bezugselektrode RE. Ein Regelkreis umfasst eine Spannungsquelle in Form eines Regelverstärkers - hier: eines Potentiostaten -, an welchen einerseits die jeweiligen Arbeitselektroden WE, andererseits die Gegenelektrode CE und die Referenzelektrode RE derart angeschlossen sind, dass der elektrische Strom zwischen den Arbeitselektroden WE und der Gegenelektrode CE über die zwischen den Arbeitselektroden WE und der Referenzelektrode RE angelegte elektrische Spannung geregelt sowie der elektrische Strom einer jeweiligen Arbeitselektrode WE mittels zyklischer Voltammetrie erfasst werden kann. Die Referenzelektrode RE steht dabei in als solcher bekannter Weise mit einem hochohmigen Anschluss des Potentiostaten in Verbindung, um als Bezugspunkt für die Ermittlung der relativen Potentiale der Arbeitselektroden WE zu dienen. Auf diese Weise kann beispielsweise eine Dreiecksspannung zwischen den Arbeitselektroden WE und der Referenzelektrode RE angelegt und der elektrische Strom zwischen den Arbeitselektroden WE und der Gegenelektrode CE eingeregelt werden, so dass das an den Arbeitselektroden WE anliegende Potential stets der vorgegebenen Dreiecksspannung entspricht. Durch das an die Arbeitselektroden WE angelegte Elektrodenpotential laufen dann beispielsweise spezifische Redoxreaktionen der zu untersuchenden Materialien ab, mit welchen die Arbeitselektroden beschichtet sind, deren Faraday'schen und kapazitiven Ströme an den Arbeitselektroden WE gemessen werden können. Durch Auftragen dieser gemessenen elektrischen Ströme über der vorgegeben Dreiecksspannung können die resultierenden Zyklovoltammogramme erzeugt werden. Die Arbeitselektroden WE stehen dabei über jeweils einen Strom-/Spannungswandler (I/U-Wandler) in Form je eines Transimpedanzverstärkers CF mit dem Potentiostaten in Verbindung, wobei sich an die Transimpedanzverstärker CF im vorliegenden Fall eine Datenerfassungs- und -auswerteeinheit anschließt. Letztere kann einerseits eine zur Datenaufnahme der gemessenen Ströme der Arbeitselektroden WE dienende Datenerfassungseinheit DAQ, wie beispielsweise eine PCI-Messkarte, andererseits einen, beispielsweise mit einer LabVIEW-Software, programmtechnisch eingerichteten Computer umfassen, welcher zur Ermittlung Strom-/Spannungscharakteristika der Arbeitselektroden WE dient. Es sei an dieser Stelle allerdings darauf hingewiesen, dass grundsätzlich auch ein individueller Potentiostat für eine jeweilige Arbeitselektrode WE vorgesehen sein kann (nicht gezeigt), so dass mittels individueller Potentionstatschaltkreise an jeder Arbeitselektrode WE eine individuelle elektrische Spannung eingestellt werden kann.

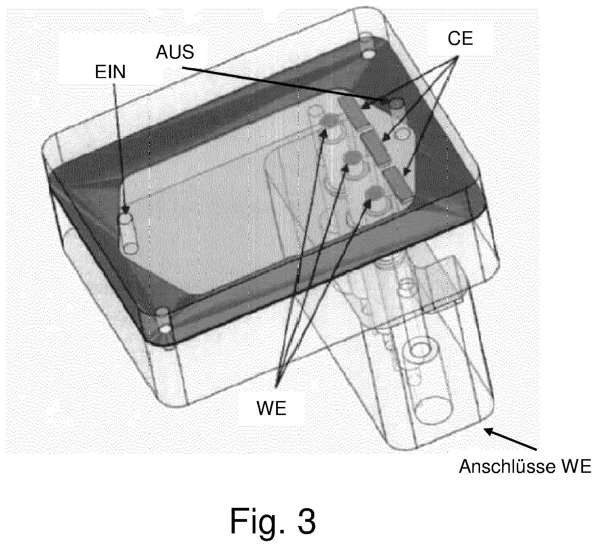

Wie aus der Fig. 3 ersichtlich, kann die Messzelle der Vorrichtung beispielsweise einen im Wesentlichen rechteckförmigen Querschnitt besitzen, im Bereich dessen einen Endes der mit der in der Fig. 3 nicht nochmals zeichnerisch wiedergegebenen Pumpe in Verbindung stehende Einlass EIN und im Bereich dessen entgegengesetzten Endes der Auslass AUS angeordnet ist, um die Messzelle kontinuierlich und laminar mit dem Elektrolyt durchströmen zu können. Die Arbeitselektroden WE sind äquidistant voneinander in einer sich senkrecht zur Strömungsrichtung des Elektrolyts in der Messzelle erstreckenden Reihe angeordnet, so dass sich an jeder Arbeitselektrode WE dasselbe laminare Strömungsprofil des Elektrolyts einzustellen vermag und sich die Elektroden nicht gegenseitig beeinflussen können. Der Abstand der jeweils äußeren Arbeitselektroden WE von der Wandung der Messzelle entspricht zu diesem Zweck gleichfalls etwa dem Abstand zwischen den Arbeitselektroden WE. In Strömungsrichtung des Elektrolyts stromab befindet sich die den Arbeitselektroden WE gemeinsam zugeordnete Gegenelektrode CE, welche auf diese Weise das laminare Strömungsprofil des Elektrolyts um die jeweiligen Arbeitselektroden WE gleichfalls nicht beeinflusst. Die in der Fig. 3 nicht erkennbare Referenzelektrode RE (vgl. die obige Fig. 2) befindet sich außerhalb der Messzelle mit dem Elektrolyt in Kontakt und kann beispielsweise in dem in der Fig. 3 gleichfalls nicht zeichnerisch wiedergegebenen Elektrolytreservoir oder auch in einem Bypass angeordnet sein, um zu verhindern, dass sich das Elektrodenpotential in Abhängigkeit der Strömungsgeschwindigkeit des Elektrolyts in der Messzelle verschieben kann.

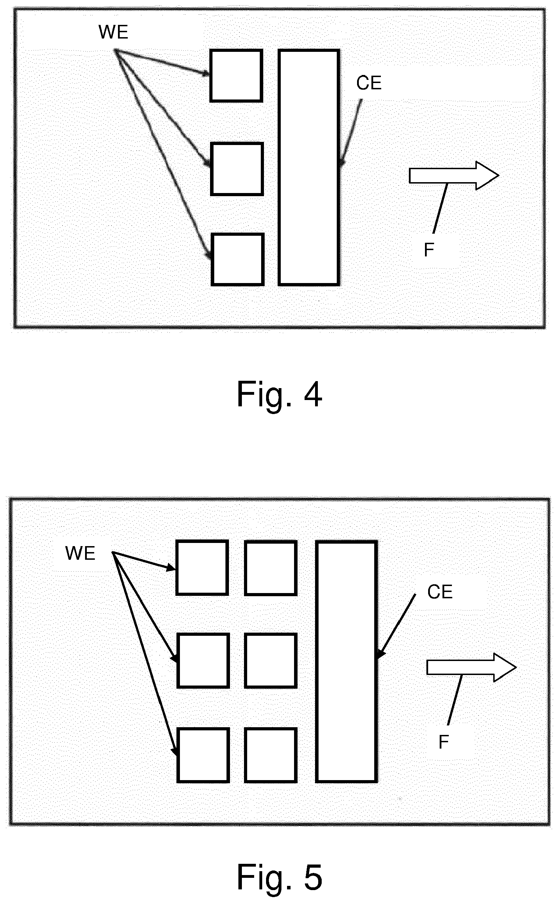

In der Fig. 4 ist eine solche Grundanordnung der Arbeitselektroden WE und der Gegenelektrode CE in Bezug auf die Strömungsrichtung F des Elektrolyts nochmals in Form einer schematischen Draufsicht auf die Messzelle dargestellt.

Die in der Fig. 5 gezeigte schematische Draufsicht auf eine alternative Ausgestaltung einer Anordnung der Arbeitselektroden WE und der Gegenelektrode CE in Bezug auf die Strömungsrichtung F des Elektrolyts in der Messzelle unterscheidet sich von jener der Fig. 4 vornehmlich dadurch, dass die Arbeitselektroden WE in Form von - in Strömungsrichtung F betrachtet - hintereinander angeordneten Elektrodenpaaren ausgestaltet sind, welche elektrisch voneinander isoliert und jeweils an den Potentionstaten (in der Fig. 5 nicht gezeigt) angeschlossen sind, welcher in diesem Fall in Form eines Bipotentiostaten ausgebildet ist, welcher es ermöglicht, die zweite Reihe an Arbeitselektroden WE in Bezug auf die erste Reihe an Arbeitselektroden WE mit einem elektrischen Differenzpotential zu beaufschlagen, um weitere Aussagen über die in den zu untersuchenden Materialien, mit welchen die Arbeitselektroden WE beschichtet sind, ablaufenden Redoxreaktionen treffen zu können, wie z.B. hinsichtlich Zwischenprodukten, Umsatzrate etc.

Während die Arbeitselektroden WE bei der Ausgestaltung der Fig. 1 bis 4 jeweils analog dem Verfahren der rotierenden Scheibenelektrode ("rotating disk electrode", RDE) betrieben werden können ("RDE-Konfiguration"), eröffnet die Ausgestaltung der Fig. 5 einen Betrieb der Paare von Arbeitselektroden WE jeweils analog dem Verfahren der rotierenden Ringscheibenelektrode ("rotating ring-disk electrode", RRDE; "RRDE-Konfiguration").

Die Fig. 6 zeigt ein Zyklovoltammogramm der mittels der Vorrichtung gemäß den Fig. 1 bis 4 ermittelten Messströme $I_{Mess}$ einer Arbeitselektrode WE der Messzelle in Abhängigkeit der mittels des Potentiostaten eingestellten Spannung U bei verschiedenen Durchflussgeschwindigkeiten des Elektrolyts durch die Messzelle zur hydrodynamischen Charakterisierung der Messzelle, wobei als Elektrolyt ein Modellelektrolytsystem auf der Basis einer Kaliumhexacyanidoferrat(III)-Lösung verwendet worden ist. Wie weiter oben erwähnt, können zur hydrodynamischen Charakterisierung der Messzelle die Variablen x und a des Zusammenhangs der Sherwood-Zahl Sh mit der Reynolds-Zahl Re

$$Sh = x \cdot Re^a$$

wobei:

Sh:    Sherwood-Zahl;

Re:     Reynolds-Zahl;

a:      von der Strömung des Elektrolyts und von der Geometrie der Messzelle abhängige Variable, welche experimentell ermittelt wird;

x:      zusammengefasste Variable, bestehend aus den Konstanten K, $Sc^b$ und $\Gamma^c$ des allgemeinen Potenzgesetzes (siehe oben), welche experimentell bestimmt wird;

mittels elektrochemischer Messung - hier unter Verwendung des Modellelektrolytsystems Kaliumhexacyanidoferrat(III) - bestimmt werden, wobei einerseits anhand des obigen Zusammenhangs der Sherwood-Zahl Sh von der Reynolds-Zahl Re, andererseits anhand des allgemeinen Potenzgesetzes

$$Sh = K \cdot Re^a \cdot Sc^b \cdot \Gamma^c$$

der Massentransportanteil ($I_{MT}$) des elektrischen Messstromes ($I_{Mess}$) ermittelt werden kann. Dabei gilt für den Massentransportanteil ($I_{MT}$) des elektrischen Stromes der folgende Zusammenhang:

$$Sh = x * Re^a \leftrightarrow Sh = \frac{I_{MT} * d_h}{z * F * c * D * A}$$

wobei:

Sh:     Sherwood-Zahl;

x:      zusammengefasste Variable, umfassend: K, $Sc^b$ und $\Gamma^c$, welche experimentell bestimmt wird;

a:      Variable, welche abhängig ist von der Geometrie der Messzelle sowie den Strömungseigenschafen und ebenfalls experimentell bestimmt wird;

$I_{MT}$:    Massentransportanteil des elektrischen Stromes;

$d_h$:     hydrodynamischer Durchmesser des Strömungskanals in der Messzelle;

z:      Ladungszahl;

F:      Faraday-Konstante;

c:      Konzentration des jeweils zu untersuchenden elektrochemisch aktiven Materials;

D:      Diffusionskoeffizient;

A:      Elektrodenfläche, welche mit dem elektrochemisch aktiven Material beschichtet worden ist.

Zur Ermittlung der Variablen x und a der obigen Formel werden die Massentransport-limitierten Grenzströme des Modellelektrolytsystems (hier: Kaliumhexacyanidoferrat(III)) bei verschiedenen Strömungsgeschwindigkeiten bzw. Reynolds-Zahlen in der Messzelle bestimmt. Die Massentransport-limitierten Ströme ($I_{MT}$) werden dabei jeweils mittels Zyklovoltammetrie über das sich ausbildende Grenzstromplateau bei starker Polarisierung der Arbeitselektrode WE im Grenzstrompotentialbereich bestimmt, wobei die in der Fig. 6 strichlinierten vertikalen Linien die drei Grenzstrompotentiale bei einem Potential von 250 mV, 300 mV bzw. 350 mV an der Arbeitselektrode WE zeigen, bei welchen ein exponentieller Zusammenhang ermittelt wurde.

Die Grenzströme können nun mit der vorgenannten Formel mit den entsprechenden Stoffdaten des Modellelektrolytsystems (hier: Kaliumhexacyanidoferrat(III)) in die dimensionslose Sherwood-Zahl Sh umgerechnet werden. Aus den derart erhaltenen Sherwood-Zahl/Reynolds-Zahl-Datenpaaren wird ein doppeltlogarithmischer Auftrag für die Potentiale im Grenzstrompotentialbereich erstellt, wie es in der Fig. 7 erkennbar ist. Dabei ist in der Fig. 7 ein Schaubild der mittels der Vorrichtung gemäß den Fig. 1 bis 4 ermittelten Sherwood-Zahl Sh in Abhängigkeit der Reynolds-Zahl Re für die drei elektrischen Potentiale 250 mV, 300 mV und 350 mV der Arbeitselektrode WE gegenüber der Referenzelektrode RE - hier: in Form einer reversiblen Wasserstoffelektrode ("reversible hydrogen electrode", RHE) - bei der Sauerstoffstoffreduktionsreaktion ("oxygen reduction reaction", ORR) anlässlich der hydrodynamischen Charakterisierung der Messzelle bei verschiedenen Strömungsgeschwindigkeiten des Modellelektrolytsystems dargestellt, wobei gilt:

$$Sh \ = \ x \ \cdot \ Re^b$$

Durch lineare Regression des Auftrags können mittels der Formel

$$log(Sh) = a \cdot log(Re) + log(x)$$

die beiden unbekannten Variablen a und x der obigen Abhängigkeit der Sherwood-Zahl Sh von der Reynolds-Zahl Re in Form einer Geradengleichung bestimmt werden, wobei a die Geradensteigung und x der Schnittpunkt der Geraden mit der y-Achse ist. Durch die experimentelle Ermittlung dieser Parameter können die strömungs- und geometrieabhängigen Variablen Formel eliminiert werden, wobei der dimensionslose Faktor a (Geradensteigung) beim vorliegenden Ausführungsbeispiel ca. 16,784 beträgt, während der dimensionslose Exponent x (Schnittpunkt der Geraden mit der y-Achse) beim vorliegenden Ausführungsbeispiel ca. 0,014 beträgt, so dass der Massentransportanteil ($I_{MT}$) des elektrischen Stromes analytisch beschrieben werden kann. Analog dem Verfahren der rotierenden Scheibenelektrode kann die Auswertung des gemessenen Stromes ($I_{Mess}$) somit nach der Koutecky-Levich-Methode zur Bestimmung des kinetischen Stromanteils ($I_{kin}$) über die Korrektur des gemessenen Stromes ($I_{Mess}$) um den aus Massentransport resultierenden Stromanteil ($I_{MT}$) erfolgen.

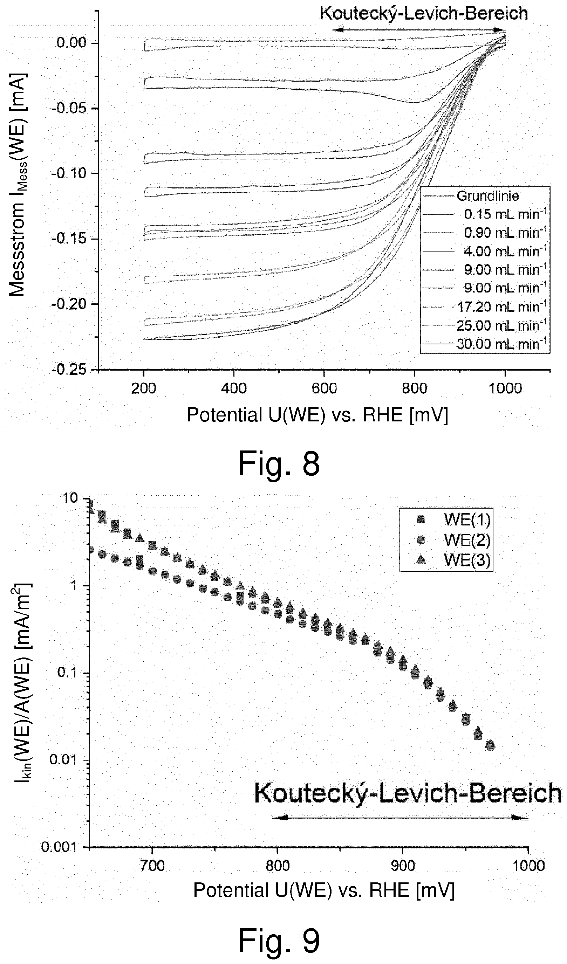

Die Fig. 8 zeigt ein Schaubild der mittels der Vorrichtung gemäß den Fig. 1 bis 4 ermittelten Messströme $I_{Mess}$ einer der mit einem handelsüblichen Elektrokatalysator als Testmaterial versehenen Arbeitselektroden WE in Abhängigkeit der an dieser Arbeitselektrode WE anliegenden elektrischen Spannung U gegenüber der Referenzelektrode RE - hier: in Form einer reversiblen Wasserstoffelektrode ("reversible hydrogen electrode", RHE) - bei der Sauerstoffstoffreduktionsreaktion ("oxygen reduction reaction", ORR) bei verschiedenen laminaren Strömungsgeschwindigkeiten des Elektrolyts durch die Messzelle. Die Reihenfolge der in der Legende der Fig. 8 angegebenen Strömungsgeschwindigkeiten entspricht dabei der Reihenfolge der Messkurven von oben nach unten. Man erkennt in Analogie zu dem bekannten Verfahren der rotierenden Scheibenelektrode den vornehmlich kinetisch bestimmten Koutecky-Levich-Bereich, wobei sich der Reziprokwert des Messstromes $I_{Mess}$ aus der Summe der Reziprokwerte dessen kinetischen Anteils $I_{kin}$ und dessen Massentransportanteils $I_{MT}$ ergibt:

$$I_{Mess}^{-1} = I_{kin}^{-1} + I_{MT}^{-1}$$

In der Fig. 9 ist schließlich ein Schaubild der mittels der Vorrichtung gemäß den Fig. 1 bis 4 ermittelten, um die Massentransportanteile $I_{MT}$ bereinigten kinetischen Anteile $I_{kin}$ der Messströme $I_{Mess}$ - hier anhand der Stromdichte in [mA/m$^2$] bezogen auf die mit dem Testmaterial versehene Fläche A einer jeweiligen Arbeitselektrode WE1, WE2, WE3 - von drei mit dem handelsüblichen Elektrokatalysator als Testmaterial versehenen Arbeitselektroden WE1, WE2 und WE3 in Abhängigkeit der an diesen Arbeitselektroden WE1, WE2 und WE3 anliegenden elektrischen Spannung gegenüber der Referenzelektrode RE - hier: wiederum in Form einer reversiblen Wasserstoffelektrode - bei der Sauerstoffstoffreduktionsreaktion dargestellt, wobei der Koutecky-Levich-Bereich entsprechend der Fig. 8 markiert worden ist.

**Patentansprüche**

1.   Verfahren zur simultanen Ermittlung der elektrochemischen Aktivität einer Mehrzahl an Materialien, insbesondere Elektrokatalysatoren, indem zwischen einer jeweilige Arbeitselektrode (WE), auf welche das jeweilige Material aufgebracht ist, und einer Referenzelektrode (RE) in Gegenwart eines flüssigen Elektrolyten eine elektrische Spannung angelegt wird und die zwischen einer jeweiligen Arbeitselektrode (WE) und wenigstens einer Gegenelektrode (CE) in Gegenwart des Elektrolyten erzeugten elektrischen Ströme ermittelt werden, wobei

- zumindest zwischen dem Elektrolyt und den Arbeitselektroden (WE) eine Relativgeschwindigkeit erzeugt wird und
- die hierbei zwischen einer jeweiligen Arbeitselektrode (WE) und der Gegenelektrode (CE) erzeugten elektrischen Ströme ermittelt werden,

**dadurch gekennzeichnet, dass** die Arbeitselektroden (WE) stationär in einer Messzelle angeordnet werden und die Messzelle derart kontinuierlich mit dem Elektrolyt durchströmt wird, dass der Elektrolyt jede Arbeitselektrode (WE) mit einer laminaren Strömung mit im Wesentlichen derselben Strömungsgeschwindigkeit und demselben Strömungsprofil umströmt.

2.   Verfahren nach Anspruch 1, **dadurch gekennzeichnet, dass** die Arbeitselektroden (WE) in der Messzelle

- in Wenigstens einer Reihe angeordnet werden, wobei sich die Reihe an Arbeitselektroden (WE) insbesondere im Wesentlichen senkrecht zur Strömungsrichtung (F) des Elektrolyts erstreckt, und/oder
- im Wesentlichen äquidistant voneinander angeordnet werden, wobei die jeweiligen äußeren Arbeitselektroden (WE) insbesondere mit einem Abstand von der Wandung der Messzelle angeordnet werden, welcher im Wesentlichen dem Abstand zwischen den Arbeitselektroden (WE) entspricht,

um für ein entsprechendes laminares Strömungsprofil des Elektrolyts an allen Arbeitselektroden (WE) zu sorgen.

3. Verfahren nach Anspruch 1 oder 2, **dadurch gekennzeichnet, dass** die Referenzelektrode außerhalb der Messzelle in dem im Wesentlichen ruhenden Elektrolyt angeordnet wird.

4. Verfahren nach einem der Ansprüche 1 bis 3, **dadurch gekennzeichnet, dass** die zwischen einer jeweilige Arbeitselektrode (WE), auf welche das jeweilige Material aufgebracht ist, und einer Referenzelektrode (RE) angelegte elektrische Spannung, insbesondere im Wesentlichen sägezahn- oder sinusförmig, variiert wird und die zwischen einer jeweiligen Arbeitselektrode (WE) und der Gegenelektrode (CE) hierdurch erzeugten elektrischen Ströme ermittelt werden.

5. Verfahren nach einem der Ansprüche 1 bis 4, **dadurch gekennzeichnet, dass** zur Ermittlung der elektrischen Strom-/Spannungscharakteristik einer jeweiligen Arbeitselektrode (WE)

- die Strömungsgeschwindigkeit des Elektrolyts in der Messzelle variiert wird und
- die hierbei erzeugten elektrischen Ströme in Abhängigkeit des jeweiligen Arbeitselektrodenpotenzials bei einer jeweiligen Strömungsgeschwindigkeit des Elektrolyts zwischen einer jeweiligen Arbeitselektrode (WE) und der Gegenelektrode (CE) ermittelt werden,

wobei für die Arbeitselektroden (WE) jeweils eine Strom-Potenzial-Kurve erstellt wird.

6. Verfahren nach einem der Ansprüche 1 bis 5, **dadurch gekennzeichnet, dass** der jeweils ermittelte elektrische Strom ($I_{Mess}$) einer jeweiligen Arbeitselektrode (WE) um den von der Strömungsgeschwindigkeit des Elektrolyts in Bezug auf die jeweilige Arbeitselektrode (WE) abhängigen Massentransportanteil ($I_{MT}$) des elektrischen Stromes bereinigt wird, um den kinetischen Anteil ($I_{kin}$) des elektrischen Stromes einer jeweiligen Arbeitselektrode (WE) zu bestimmen.

7. Verfahren nach Anspruch 6, **dadurch gekennzeichnet, dass** der kinetische Anteil ($I_{kin}$) des elektrischen Stromes einer jeweiligen Arbeitselektrode (WE) unter Verwendung der Koutecký-Levich-Gleichung bestimmt wird, wobei insbesondere die Sherwood-Zahl (Sh) einerseits in Abhängigkeit des Massentransportanteils ($I_{MT}$) des elektrischen Stromes

$$Sh = \frac{I_{MT} * d_h}{z * F * c * D * A}$$

mit Sh: Sherwood-Zahl;

$I_{MT}$: Massentransportanteil des elektrischen Stroms;
$d_h$: hydrodynamischer Durchmesser des Strömungskanals in der Messzelle;
z: Ladungszahl;
F: Faraday-Konstante;
c: Konzentration des elektrochemisch aktiven Materials;
D: Diffusionskoeffizient;
A: Elektrodenfläche, welche mit dem elektrochemisch aktiven Material beschichtet worden ist,

andererseits in Abhängigkeit von der Reynolds-Zahl (Re)

$$Sh = x * Re^{a}$$

mit

Sh: Sherwood-Zahl;

Re: Reynolds-Zahl;

x: experimentell bestimmbare Variable;

a: experimentell bestimmbare Variable,

beschrieben wird, um den Massentransportanteil ($I_{MT}$) des elektrischen Stromes einer jeweiligen Arbeitselektrode (WE) zu ermitteln, um welchen der Messstrom ($I_{Mess}$) einer jeweiligen Arbeitselektrode (WE) bereinigt wird, um den kinetischen Anteil ($I_{kin}$) des elektrischen Stromes zu erhalten.

8.  Vorrichtung zur simultanen Ermittlung der elektrochemischen Aktivität einer Mehrzahl an Materialien, insbesondere Elektrokatalysatoren, welche zur Durchführung eines Verfahrens nach einem der Ansprüche 1 bis 7 geeignet ist, umfassend

    - eine Mehrzahl an Arbeitselektroden (WE), auf welche das jeweilige Material aufgebracht ist,
    - wenigstens eine Gegenelektrode (CE),
    - wenigstens eine Referenzelektrode (RE),
    - wenigstens eine regelbare Spannungsquelle, insbesondere in Form eines Regelverstärkers, welche einerseits mit einer jeweiligen Arbeitselektrode (WE), andererseits sowohl mit der Gegenelektrode (CE) als auch mit der Referenzelektrode (RE) in Verbindung steht, um ein jeweiliges Arbeitselektrodenpotenzial einstellen zu können,
    - eine zur Aufnahme eines Elektrolyts geeignete Messzelle, in welcher zumindest die Arbeitselektroden (WE) und die Gegenelektrode (CE) angeordnet sind, und
    - eine Messeinrichtung zur Ermittlung der zwischen einer jeweiligen Arbeitselektrode (WE) und der Gegenelektrode (CE) erzeugten elektrischen Ströme,

    dadurch gekennzeichnet, dass die Arbeitselektroden (WE) stationär in der Messzelle angeordnet sind, wobei die Messzelle wenigstens einen Einlass (EIN) und wenigstens einen Auslass (AUS) aufweist, und wobei der Messzelle eine Pumpe zugeordnet ist, um die Messzelle kontinuierlich mit einer laminaren Strömung des Elektrolyts zu durchströmen.

9.  Vorrichtung nach Anspruch 8, dadurch gekennzeichnet, dass die Arbeitselektroden (WE) in der Messzelle

    - in Wenigstens einer Reihe angeordnet sind, wobei sich die Reihe an Arbeitselektroden (WE) insbesondere im Wesentlichen senkrecht zur Strömungsrichtung (F) des Elektrolyts erstreckt, und/oder
    - im Wesentlichen äquidistant voneinander angeordnet sind, wobei die jeweiligen äußeren Arbeitselektroden (WE) insbesondere mit einem Abstand von der Wandung der Messzelle angeordnet sind, welcher im Wesentlichen dem Abstand zwischen den Arbeitselektroden (WE) entspricht.

10. Vorrichtung nach Anspruch 8 oder 9, dadurch gekennzeichnet, dass die Referenzelektrode außerhalb der Messzelle, insbesondere in einem zur Bevorratung des Elektrolyts dienenden Reservoir, angeordnet ist.

11. Vorrichtung nach einem der Ansprüche 8 bis 10, dadurch gekennzeichnet, dass die Summe der Oberflächen der Arbeitselektroden (WE) kleiner ist als die Oberfläche der Gegenelektrode (CE).

12. Vorrichtung nach einem der Ansprüche 8 bis 11, dadurch gekennzeichnet, dass die Pumpe steuerbar und/oder regelbar ist, um die Strömungsgeschwindigkeit des Elektrolyts in der Messzelle einzustellen und/oder zu variieren, wobei es sich bei der Pumpe insbesondere um eine pulsationsarme Pumpe handelt.

13. Vorrichtung nach einem der Ansprüche 8 bis 12, dadurch gekennzeichnet, dass die Spannungsquelle einen Potentiostaten umfasst, welcher einerseits die elektrische Spannung zwischen den Arbeitselektroden (WE) und der Referenzelektrode (RE) über den elektrischen Strom zwischen den Arbeitselektroden (WE) und der Gegenelektrode (RE) regelt, andererseits den elektrischen Strom der Arbeitselektroden (WE) erfasst, wobei die Arbeitselektroden (WE) insbesondere unter Zwischenschaltung jeweils eines Transimpedanzverstärkers (CF) mit dem Potentiostaten in Verbindung stehen.

14. Vorrichtung nach einem der Ansprüche 8 bis 13, dadurch gekennzeichnet, dass sie ferner eine Datenerfassungs- und -auswerteeinheit aufweist, welche zur Ermittlung der elektrischen Strom-/Spannungscharakteristik einer jeweiligen Arbeitselektrode (WE) ausgebildet ist.

**15.** Vorrichtung nach Anspruch 14, **dadurch gekennzeichnet, dass** die Datenerfassungs- und -auswerteeinheit zur Bereinigung des jeweils ermittelten elektrischen Stromes ($I_{Mess}$) einer jeweiligen Arbeitselektrode (WE) um den von der Strömungsgeschwindigkeit des Elektrolyts in Bezug auf die jeweilige Arbeitselektrode (WE) abhängigen Massentransportanteil ($I_{MT}$) des elektrischen Stromes ausgebildet ist, um den kinetischen Anteil ($I_{kin}$) des elektrischen Stromes einer jeweiligen Arbeitselektrode (WE) zu bestimmen, insbesondere unter Verwendung der Koutecký-Levich-Gleichung.

Fig. 1

Fig. 2

CE

AUS

EIN

WE

Anschlüsse WE

Fig. 3

Fig. 4

Fig. 5

Fig. 6

Fig. 7

Fig. 8

Fig. 9

EP 4 134 165 A1

Europäisches Patentamt
European Patent Office
Office européen des brevets

**EUROPÄISCHER RECHERCHENBERICHT**

Nummer der Anmeldung

**EP 22 18 5354**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2009 098027 A (EIWA CORP) 7. Mai 2009 (2009-05-07) | 1-5,8-14 | INV. B01L3/00 |
| A | * Absätze [0011] – [0012] * * Absatz [0017] * * Absatz [0022] * * Absatz [0027] * * Absatz [0034] * ----- | 6,7,15 | G01N27/28 G01N27/416 |
| A | US 2014/151224 A1 (GLEZER ELI N [US] ET AL) 5. Juni 2014 (2014-06-05) * Absätze [0098] – [0101] * * Abbildung 1b * * Absätze [0130] – [0131] * * Absatz [0166] * ----- | 1-15 | |
| A | US 2005/035002 A1 (WANG YOUQI [US] ET AL) 17. Februar 2005 (2005-02-17) * Absatz [0002] * * Absatz [0006] * * Abbildungen 11-14 * ----- | 1-15 | |

RECHERCHIERTE SACHGEBIETE (IPC)

B01L
G01N

Der vorliegende Recherchenbericht wurde für alle Patentansprüche erstellt

| Recherchenort | Abschlußdatum der Recherche | Prüfer |
|---|---|---|
| München | 20. Dezember 2022 | Michalitsch, Richard |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

## ANHANG ZUM EUROPÄISCHEN RECHERCHENBERICHT
## ÜBER DIE EUROPÄISCHE PATENTANMELDUNG NR.

EP 22 18 5354

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2022

| Im Recherchenbericht angeführtes Patentdokument | Datum der Veröffentlichung | Mitglied(er) der Patentfamilie | Datum der Veröffentlichung |
|---|---|---|---|
| JP 2009098027 A | 07-05-2009 | KEINE | |
| US 2014151224 A1 | 05-06-2014 | AU 2003302263 A1 | 29-07-2004 |
| | | AU 2011200010 A1 | 27-01-2011 |
| | | CA 2511389 A1 | 22-07-2004 |
| | | CA 2772050 A1 | 22-07-2004 |
| | | CA 2941139 A1 | 22-07-2004 |
| | | CA 3122193 A1 | 22-07-2004 |
| | | CA 3171720 A1 | 22-07-2004 |
| | | CN 101098956 A | 02-01-2008 |
| | | CN 102620959 A | 01-08-2012 |
| | | EP 1583950 A2 | 12-10-2005 |
| | | EP 2711415 A2 | 26-03-2014 |
| | | HK 1117189 A1 | 09-01-2009 |
| | | JP 4764010 B2 | 31-08-2011 |
| | | JP 5127878 B2 | 23-01-2013 |
| | | JP 5367019 B2 | 11-12-2013 |
| | | JP 2006517652 A | 27-07-2006 |
| | | JP 2010243498 A | 28-10-2010 |
| | | JP 2011169908 A | 01-09-2011 |
| | | JP 2011203272 A | 13-10-2011 |
| | | US 2004189311 A1 | 30-09-2004 |
| | | US 2009065357 A1 | 12-03-2009 |
| | | US 2009066339 A1 | 12-03-2009 |
| | | US 2012055809 A1 | 08-03-2012 |
| | | US 2014151224 A1 | 05-06-2014 |
| | | US 2014378341 A1 | 25-12-2014 |
| | | US 2016356722 A1 | 08-12-2016 |
| | | US 2018172595 A1 | 21-06-2018 |
| | | US 2020355616 A1 | 12-11-2020 |
| | | US 2021055287 A1 | 25-02-2021 |
| | | WO 2004061418 A2 | 22-07-2004 |
| US 2005035002 A1 | 17-02-2005 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60317881 T2

- EP 1479121 B1

**In der Beschreibung aufgeführte Nicht-Patentliteratur**

- **VON SAMUEL GUERIN ; BRIAN E. HAYDEN ; CHRISTOPHER E. LEE ; CLAIRE MORMICHE ; JOHN R. OWEN ; ANDREA E. RUSSELL ; BRIAN THEOBALD ; DAVID THOMPSETT.** Combinatorial electrochemical screening of fuel cell electrocatalysts. *J. Comb. Chem.,* 2004, vol. 6 (1), 149-158

- **VON PETER STRASSER ; QUN FAN ; MARTIN DEVENNEY ; W. HENRY WEINBERG ; PING LIU ; JENS K. NØRSKOV.** High throughput experimental and theoretical predictive screening of materials - A comparative study of search strategies for new fuel cell anode Catalysts. *J. Phys. Chem. B,* 2003, vol. 107 (40), 11013-11021

- **VON ANNA K. SCHUPPERT ; ANGEL A. TOPALOV ; IOANNIS KATSOUNAROS ; SEBASTIAN O. KLEMM ; KARL J. J. MAYRHOFER.** A scanning flow cell system for fully automated screening of electrocatalyst materials. *Journal of The Electrochemical Society,* 2012, vol. 159 (11), F670-F675

- **VON LIU RENXUAN ; EUGENE S. SMOTKIN.** Array membrane electrode assemblies for high throughput screening of direct methanol fuel cell anode catalysts. *Journal of Electroanalytical Chemistry,* 2002, vol. 535 (1-2), 49-55

- Mass Transport in the Rectangular Channel of a Filter Press Electrolyzer (the FM01 LC Reactor). **VON M. GRIFFITHS ; C.P. LEÓN ; F. C. WALSH.** AIChE Journal. 2005, vol. 51